# FASCICULE DE BREVET EUROPEEN

(11) **EP 2 205 848 B1**
(45) Date de publication et mention de la délivrance du brevet: **05.06.2013**
(21) Numéro de dépôt: 08871531.3
(22) Date de dépôt: 24.10.2008
(51) Int. Cl.: F02K 1/76

(54) **SYSTEME DE CONTROLE ET PROCEDE DE CONTROLE**
KONTROLLSYSTEM UND KONTROLLVERFAHREN
MONITORING SYSTEM AND MONITORING METHOD

(30) Priorité: 31.10.2007 FR 0707665
(43) Date de publication de la demande: 14.07.2010
(73) Titulaire: Airbus Opérations SAS, 31060 Toulouse (FR)
(72) Inventeur: ZACCARIA, Patrick, F-31300 Toulouse (FR)
(74) Mandataire: Hirsch, Marc-Roger
(86) Numéro de dépôt international: PCT/FR2008/001495
(87) Numéro de publication internationale: WO 2009/092872

(56) Documents cités:
- EP-A- 0 843 089
- EP-A- 1 512 627
- GB-A- 2 408 725
- US-A- 3 086 360
- US-A- 3 321 921

## Description

La présente invention concerne un système de contrôle et un procédé de contrôle, appliqués notamment à un turboréacteur.

De nombreux aéronefs, notamment ceux destinés au transport civil, sont équipés d'inverseurs de poussée permettant d'améliorer le freinage desdits aéronefs lors de l'atterrissage. Ces inverseurs de poussée sont associés aux moteurs des aéronefs et ils sont susceptibles d'être commandés pour pouvoir passer d'une position inactive repliée à une position active déployée et, inversement, de la position active déployée à la position inactive repliée. En position active déployée, un inverseur de poussée reçoit le jet du moteur associé et inverse le jet, ce qui lui permet de participer au freinage de l'aéronef.

De façon générale, les moteurs d'un aéronef sont équipés d'un inverseur de poussée. L'activation de l'inverseur de poussée d'un moteur est déclenchée par le pilote au moyen d'un organe, du type levier, disposé sur la manette des gaz correspondant à ce moteur. Une action sur le levier n'est possible que si la manette des gaz est sur une position correspondant au ralenti du moteur.

Le document EP-A-1 512 627 (US-A-1 107 757) décrit un aéronef pourvu d'une pluralité de moteurs dont les régimes sont commandés individuellement, entre le ralenti et le plein régime, par des manettes de gaz associées à ces moteurs. Certains des moteurs de la pluralité sont équipés d'inverseurs de poussée et sont susceptibles d'être commandés pour pouvoir passer d'une position inactive à une position active déployée et, inversement, de la position active déployée à la position inactive repliée ; les autres moteurs sont dépourvus de tels inverseurs de poussée. Un dispositif de sécurité est prévu pour inhiber, au moins à partir de la position correspondant au ralenti, l'action des manettes de gaz correspondant aux moteurs dépourvus d'inverseurs de poussée, lorsque les inverseurs de poussée sont commandés pour passer de leur position inactive repliée à leur position active déployée. Ce document ne décrit pas comment est géré le contrôle des turboréacteurs comportant un inverseur de poussée par rapport à l'état de l'inverseur.

Le document EP-A-0 843 089 décrit un système de commande électrique pour inverseur de poussée de turboréacteur fixé sur un avion, l'inverseur comportant au moins un élément déplaçable entre une position repliée et une position déployée de l'inverseur. Le système comporte au moins un ensemble d'organes de manoeuvre électromécaniques pour manoeuvrer l'élément déplaçable entre les positions de repliement et de déploiement de l'inverseur de poussée. Le système comporte aussi un boîtier électronique de commande des organes de manoeuvre électromécaniques, le boîtier étant relié électriquement à un système de régulation électronique du turboréacteur. Le boîtier est destiné d'une part à traduire des commandes de repliement et de déploiement des éléments déplaçables délivrées par le système de régulation électronique en des séquences de commande des organes de manoeuvre électromécaniques et d'autre part à informer le système de régulation électronique de l'état des organes de manoeuvre et de la position des éléments déplaçables.

Dans ce système les informations des détecteurs sont fournies au système de régulation par l'intermédiaire du boîtier électronique de commande. L'inconvénient est donc que le boîtier et le système de régulation du turboréacteur doivent être compatibles, le système de régulation devant notamment suivre les évolutions du boîtier électronique de commande, ce qui complique le système de commande.

Il y a donc un besoin pour un système de contrôle du turboréacteur plus simple.

Pour cela, il est proposé un système de contrôle comprenant
- des détecteurs d'état d'un inverseur de poussée de turboréacteur,
- un calculateur de contrôle,
- un dispositif de commande de l'inverseur contrôlé par le calculateur en fonction des informations des détecteurs fournies au calculateur par l'intermédiaire du dispositif de commande,
- un dispositif de régulation du turboréacteur contrôlé par le calculateur en fonction des informations des détecteurs fournies au calculateur par l'intermédiaire du dispositif de commande.

Selon une variante, le calculateur de contrôle est adapté à contrôler l'alimentation électrique de l'inverseur de poussée.

Selon une variante, le calculateur de contrôle comprend des unités choisies dans le groupe comprenant une unité de contrôle de l'alimentation électrique de l'inverseur de poussée, une unité de contrôle du changement d'état de l'inverseur de poussée, une unité de contrôle de la régulation du turboréacteur.

Selon une variante, les détecteurs d'état sont adaptés à fournir des informations au dispositif de régulation.

Selon une variante, le dispositif de régulation est adapté à fournir des informations de fonctionnement du turboréacteur au calculateur.

Il est aussi proposé un aéronef comprenant
- au moins un turboréacteur avec un inverseur de poussée,
- le système tel que décrit précédemment, le système contrôlant le turboréacteur.
Il est aussi proposé un procédé de contrôle d'un turboréacteur appliqué au système décrit précédemment, comprenant les étapes de
- transmission d'informations d'état de l'inverseur par les détecteurs d'état au calculateur par l'intermédiaire du dispositif de commande,
- contrôle du dispositif de commande par le calculateur en fonction des informations,
- contrôle du dispositif de régulation par le calculateur en fonction des informations.

Selon une variante, le procédé comprend en outre l'étape de contrôle de l'alimentation électrique de l'inverseur de poussée par le calculateur.

Selon une variante, le procédé comprend en outre les étapes de
- transmission d'informations d'état de l'inverseur par les détecteurs d'état au dispositif de régulation,
- vérification par le dispositif de régulation de la concordance des informations reçues par les détecteurs d'état avec l'ordre reçu du calculateur.

Selon une variante, le procédé comprend en outre l'étape de fourniture par le dispositif de régulation d'informations de fonctionnement du turboréacteur au calculateur.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un schéma d'un aéronef;
- figure 2, un schéma du système de contrôle.

Il est proposé un système de contrôle comprenant des détecteurs d'état d'un inverseur de poussée d'un turboréacteur et comprenant un calculateur de contrôle. Le système comprend aussi un dispositif de commande de l'inverseur et un dispositif de régulation du turboréacteur. Le dispositif de commande est contrôlé par le calculateur en fonction des informations du détecteur fournies au calculateur par l'intermédiaire du dispositif de commande. Le dispositif de régulation est contrôlé par le calculateur en fonction des informations du détecteur fournies au calculateur par l'intermédiaire du dispositif de commande. Grâce à ce système, le dispositif de commande et le dispositif de régulation ne sont pas reliés ensemble. Ceci permet d'éviter d'avoir à rendre compatible les dispositifs de commande et de régulation. Ceci est avantageux lors de la construction ou de la maintenance du système car les deux dispositifs peuvent être considérés indépendamment l'un de l'autre. Ce système peut s'appliquer à un turboréacteur d'aéronef. Ce système est plus simple.

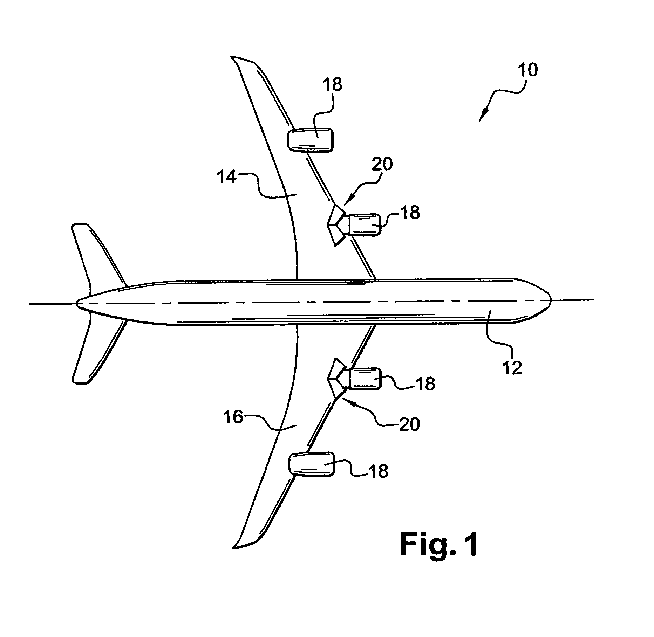

Le figure 1 montre schématiquement un aéronef 10 comportant un fuselage 12 et deux ailes 14, 16, symétriques par rapport au fuselage 12. Sur chacune des ailes 14, 16 sont montés des turboréacteurs 18. La figure 1 montre deux turboréacteurs 18 par aile uniquement à titre d'exemple. On peut envisager de mettre un seul turboréacteur 18 par aile.

Au moins un turboréacteur par aile est équipé d'un inverseur de poussée 20. L'inverseur 20 de poussée peut passer d'une position inactive repliée à une position active déployée et, inversement. En position active déployée, l'inverseur 20 de poussée reçoit le jet du turboréacteur associé et inverse le jet, ce qui permet à l'inverseur 20 de poussée de participer au freinage de l'aéronef. A titre d'exemple, l'inverseur 20 de poussée est sous la forme d'inverseur à portes arrières, mais il pourrait présenter une structure différente. Les inverseurs 20 de poussée sont représentés en position déployée sur la figure 1.

Chaque inverseur 20 de poussée est actionné par des organes de manoeuvre non représentés sur les figures. Les organes de manoeuvre peuvent comporter un vérin électrique, qui peut être irréversible, et au moins un verrou électrique de retenue de la porte, appelé verrou primaire. Le vérin peut être actionné par un moteur électrique commandé par le dispositif 26 de commande.

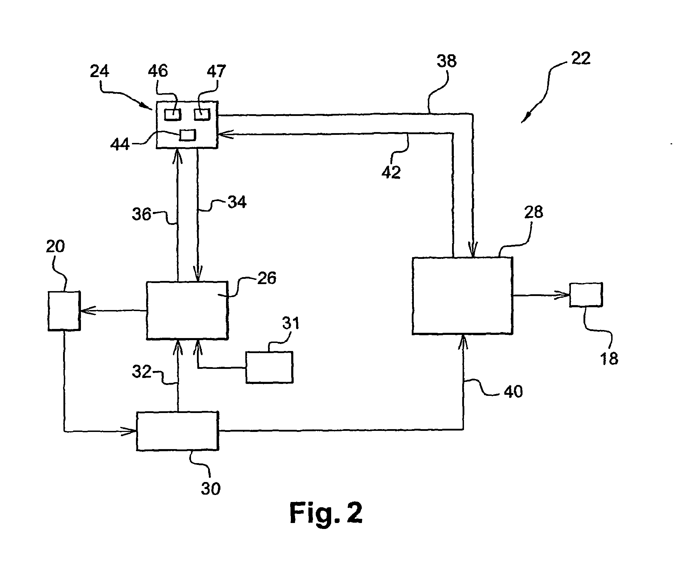

La figure 2 montre un schéma d'un système 22 de contrôle. Ce système 22 permet le contrôle d'un ou plusieurs turboréacteurs. Le contrôle du turboréacteur peut comporter le contrôle de plusieurs paramètres de fonctionnement du turboréacteur dont la régulation de la puissance du turboréacteur mais aussi le contrôle du mouvement de l'inverseur 20 de poussée. Plus spécifiquement, le système 22 de contrôle permet par exemple la gestion de la puissance du turboréacteur en fonction de la position de l'inverseur 20 de poussée, ce qui permet d'éviter des situations de pilotage dangereuses pour lesquelles le turboréacteur serait en régime maximal alors que l'inverseur 20 de poussée est en cours de changement de position. Par la suite, le système 22 sera décrit par rapport à un turboréacteur, mais on peut envisager de contrôler plus d'un turboréacteur.

Selon la figure 2, le système 22 de contrôle peut comporter un calculateur 24 de contrôle. Le système 22 de contrôle peut aussi comporter un dispositif 26 de commande de l'inverseur 20 du turboréacteur 18 et un dispositif 28 de régulation du turboréacteur 18. Le système 22 de contrôle comprend par ailleurs des détecteurs 30 d'état de l'inverseur 20 de poussée. Le système 22 comporte autant de dispositifs 26 et 28 qu'il y a de turboréacteur avec un inverseur de poussée sur l'aéronef.

Des détecteurs 30 permettent de détecter la position de l'inverseur 20, ou, plus généralement, de détecter l'état de l'inverseur 20. Chaque inverseur 20 est pourvu de détecteurs 30 détectant l'état de l'inverseur 20 associé. Les détecteurs 30 peuvent être des détecteurs de proximité ou des détecteurs de position. Les informations des détecteurs 30 peuvent être relatives à un état déployé ou à un état replié de l'inverseur. Egalement les informations des détecteurs 30 peuvent être relatives à un changement d'état en cours. Les informations des détecteurs sont traitées par le calculateur 24 de contrôle. D'autres détecteurs 31 peuvent fournir des informations au dispositif 26 qui peuvent ensuite être éventuellement transmises au calculateur 24 ; il peut s'agir par exemple des détecteurs de verrous.

Un calculateur 24 de contrôle peut être prévu par moteur. Le calculateur 24 de contrôle peut aussi être prévu pour contrôler tous les turboréacteurs de l'aéronef. Ainsi, un unique calculateur 24 est prévu dans l'aéronef pour contrôler l'ensemble des turboréacteurs 18. Le calculateur 24 de contrôle peut être situé dans le cockpit de l'aéronef et contrôler de manière centrale les turboréacteurs 18. L'intérêt d'un calculateur au niveau des systèmes avion est que les ordres envoyés sont compilés à partir d'informations de natures différentes, que ce soit les consignes données par le pilote, l'état de vol de l'aéronef et les informations relatives à l'état des inverseurs de poussée. Le calculateur 24 peut comporter une pluralité d'unités pour remplir les différentes fonctions du calculateur 24. Une unité 44 peut remplir la fonction de contrôle du changement d'état de l'inverseur de poussée. Une autre unité 46 peut remplir la fonction de contrôle de l'alimentation des inverseurs. Une unité supplémentaire 47 peut remplir la fonction de contrôle de la régulation du turboréacteur. L'intérêt d'avoir plusieurs unités est de tenir des objectifs de sécurité de non déploiement de l'inverseur hors des plages de fonctionnement.

Le dispositif 26 de commande permet de commander l'inverseur 20. En particulier, le dispositif 26 permet de commander les changements de position de l'inverseur 20 de poussée. Le dispositif 26 commande le changement d'état de l'inverseur 20, c'est-à-dire commande le passage de l'état inactif replié à l'état actif déployé et inversement. De préférence, un dispositif 26 de commande est associé à chaque inverseur 20 de poussée ; le dispositif 26 de commande est situé dans l'aile de l'aéronef, à proximité de l'inverseur associé. Le dispositif 26 de commande reçoit des informations des détecteurs 30 de l'inverseur 20 de poussée. Ces informations concernent l'état de l'inverseur 20 : il peut s'agir de l'état déployé ou replié de l'inverseur 20 mais également le fait que l'inverseur 20 est en cours de changement d'état. Sur la figure 2, la circulation d'informations des détecteurs 30 vers le dispositif 26 de commande est représentée par la flèche 32. Les informations des détecteurs 30 sont centralisées au niveau du dispositif 26 de commande. Les informations sont ensuite relayées par le dispositif 26 au calculateur 24 de contrôle. Sur la figure 2, la transmission d'informations du dispositif 26 de commande vers le calculateur 24 de contrôle est représentée par la flèche 36. Ainsi, les informations des détecteurs sont transmises directement au calculateur 24 de contrôle par le dispositif 26 de commande. Ceci offre l'avantage de transmettre plus rapidement les informations fournies par les détecteurs 30 jusqu'au calculateur 24 de contrôle. Le fait que les informations des détecteurs soient fournies directement par le dispositif 26 de commande au calculateur 24 de contrôle sans passer par le dispositif 28 de régulation permet aussi de simplifier le dispositif 28 de régulation. En effet, il est possible de réduire le nombre d'algorithmes présents dans le dispositif 28 de régulation car le dispositif 28 de régulation n'a plus à remplir la fonction de relais d'informations entre le dispositif 26 de commande et le calculateur de contrôle 24. Les données d'entrée des algorithmes se situent au niveau de l'avion/cellule et seront directement traitées par le dispositif 24. Ceci permet aussi de simplifier la connectique de transmission d'informations et d'en simplifier l'architecture de commande et de contrôle.

Le dispositif 26 de commande est contrôlé par le calculateur 24 de contrôle. Le calculateur 24 de contrôle envoie des ordres au dispositif 26 de commande pour que ce dernier commande en mouvement l'inverseur 20 de poussée. En particulier, le calculateur 24 de contrôle détecte la volonté du pilote de déclencher le changement d'état de l'inverseur 20 de poussée. Le calculateur 24 de contrôle initie alors les changements d'état de l'inverseur 20 de poussée par l'intermédiaire du dispositif 26 de commande. Les ordres envoyés par le calculateur 24 de contrôle au dispositif 26 de commande sont schématisés par la flèche 34 sur la figure 2. Le calculateur 24 combine les actions du pilote avec les informations provenant des détecteurs 30 pour formuler un ordre envoyé au dispositif 26 de commande. L'ordre envoyé par le calculateur 24 est donc établi en connaissance de la position de l'inverseur, ce qui favorise la sécurité du pilotage de l'aéronef. L'ordre envoyé au dispositif 26 de commande consiste par exemple en un déclenchement du déploiement ou le repliement de l'inverseur 20 de poussée. Une fois l'ordre reçu, le dispositif 26 de commande transforme cet ordre en une séquence de commande. La séquence de commande est une série de signaux susceptibles d'être décodés par des organes de manoeuvre et des verrous de l'inverseur. Par exemple, le dispositif 26 transmet au moteur électrique d'actionnement du vérin de porte une commande de vitesse.

Il est aussi envisageable que le dispositif 26 de commande vérifie que l'ordre reçu du calculateur 24 est effectivement en concordance avec les informations reçues des détecteurs 30. Ceci offre une ligne de sécurité supplémentaire.

Dans une telle architecture, le dispositif 26 de commande est directement en interface avec le calculateur 24 de contrôle. En d'autres termes le dispositif 26 de commande est en communication pleine avec le calculateur 24 de contrôle. Le dispositif 28 de régulation n'intervient plus entre le dispositif 26 de commande et le calculateur 24 de contrôle ; c'est le calculateur 24 qui a autorité sur le dispositif 26 de commande. Contrairement au document EP-A-0 843 089 traduisant la tendance naturelle à faire passer les ordres du calculateur 24 par le dispositif 28 de régulation du turboréacteur en raison de la proximité géographique du dispositif 28 de régulation par rapport au dispositif 26 de commande, la présente architecture s'affranchit de l'intégration et de la compatibilité des deux dispositifs. Ceci simplifie notamment la fabrication et la maintenance des dispositifs 26, 28, car chaque dispositif peut être considéré indépendamment de l'autre.

Un autre avantage est que l'on peut baisser la criticité du dispositif 26 de commande. En d'autres termes, le dispositif 26 étant subordonné au calculateur 24 de contrôle sans intermédiaire, le dispositif 26 se trouve alors directement sous contrôle du calculateur 24. La surveillance du calculateur 24 sur les actions du dispositif 26 de commande est donc plus étroite, ce qui permet de réduire les exigences d'autonomie du dispositif 26 de commande. En conséquence, le dispositif 26 peut être un dispositif moins onéreux car d'un niveau de performance moindre.

Egalement, en s'affranchissant de la présence du dispositif 28 de régulation comme intermédiaire entre le dispositif 26 de commande et le calculateur 24 de contrôle, il est possible de détecter plus rapidement une dégradation du système. En effet, l'état dégradé du dispositif 26 de commande, de l'inverseur ou d'un organe de manoeuvre est détecté plus rapidement par le calculateur 24. La responsabilité de la détection de la dégradation du système n'est plus supportée par le dispositif 28 de régulation, ce qui, encore une fois, en facilite la fabrication et la maintenance.

Le dispositif 28 permet la régulation du turboréacteur. En d'autres termes, le dispositif 28 agit sur le turboréacteur pour en modifier la puissance. Le dispositif 28 de régulation peut être un FADEC (en anglais *Full Authority Digital Engine Control*)*.* De préférence, un dispositif 28 de régulation est associé à chaque turboréacteur. Les signaux de sortie du dispositif 28 de régulation sont aptes à commander la puissance du turboréacteur.

Le dispositif 28 de régulation tient compte des informations des détecteurs 30 et des informations du calculateur 24 pour modifier la puissance du turboréacteur. Le calculateur 24 de contrôle envoie des ordres au dispositif 28 de régulation pour que ce dernier régule la puissance du turboréacteur. Le calculateur 24 de contrôle initie alors la modification de la puissance du turboréacteur par l'intermédiaire du dispositif 28 de régulation. Les ordres envoyés par le calculateur 24 de contrôle au dispositif 28 de régulation sont schématisés par la flèche 38 sur la figure 2. Plus précisément, le calculateur 24 contrôle le dispositif de régulation en tenant compte des informations des détecteurs fournis au calculateur 24 par le dispositif 26 de commande. Le calculateur 24 traite les actions du pilote et les informations provenant des détecteurs 30 pour formuler un ordre envoyé au dispositif 28 de régulation. Ceci permet de réguler la puissance du turboréacteur en fonction de la position de l'inverseur 20. En effet, le dispositif 28 de régulation ne doit pas par exemple imposer au turboréacteur un régime maximal si l'inverseur 20 est en cours de changement de position. Ceci risquerait d'endommager l'inverseur 20. Au contraire, le turboréacteur est mis en régime ralenti lors des phases de transition des inverseurs 20. Ainsi, le contrôle le calculateur 24 est établi en connaissance de la position de l'inverseur 20, ce qui favorise la sécurité du pilotage de l'aéronef.

Dans une telle architecture, le dispositif 28 de régulation est directement en interface avec le calculateur 24 de contrôle pour la régulation du turboréacteur. Les dispositifs 26, 28 sont contrôlés en parallèle, c'est-à-dire par des liaisons différentes. Le dispositif 28 de régulation ne reçoit pas d'information directement de la part du dispositif 26 de commande. Les dispositifs 26 et 28 ne sont pas en pleine communication entre eux. Le dispositif 28 de régulation est en dehors de la liaison entre le calculateur 24 et le dispositif 26 de commande. On s'affranchit ainsi de la nécessité d'appliquer les mêmes standards et protocoles de communication aux deux dispositifs 26 et 28. Il est alors possible de changer ou modifier un standard ou un protocole de communication uniquement de l'un des dispositifs 26, 28.

Dans une telle architecture, la criticité du dispositif 28 de régulation peut être baissée. En d'autres termes, le dispositif 28 ne surveillant pas le dispositif 26 de commande, la fonction de surveillance du dispositif 26 de commande est attribuée au calculateur 24. Ceci permet de réduire les exigences d'autorité et d'autonomie du dispositif 28 de régulation, en ce qui concerne la fonction inverseur. En conséquence, le dispositif 28 de régulation peut être un dispositif plus allégé en nombre d'entrée/sortie d'un point de vue matériel.

Il est aussi envisageable que le dispositif 28 de régulation reçoive des informations des détecteurs 30 d'état de l'inverseur. Ceci est schématisé sur la figure 2 par la flèche 40. Ceci permet au dispositif 28 de régulation de vérifier la concordance des ordres reçus du calculateur 24 de contrôle avec l'état des inverseurs. Ceci coffre une ligne de sécurité supplémentaire.

Le dispositif 28 de régulation peut envoyer des informations de fonctionnement du turboréacteur au calculateur 24 de contrôle. Ceci est schématisé sur la figure 2 par la flèche 42. Les informations fournies par le dispositif 28 de régulation sont par exemple des renseignements concernant le régime ou la température du turboréacteur, les pannes ou tout dysfonctionnement du turboréacteur. Ceci permet au calculateur 24 d'avoir une meilleure connaissance du fonctionnement du turboréacteur de sorte à favoriser le contrôle du fonctionnement.

Les différents éléments du système 20 de contrôle peuvent être par exemple reliés entre eux par un réseau AFDX (en anglais *Avionics Full DupleX*)*.* Il s'agit d'un réseau Ethernet redondant et fiabilisé destiné à servir de support aux communications internes à l'avion. Afin de répondre au besoin de disponibilité du réseau du système, un réseau AFDX est physiquement redondant : chaque élément du système 22 émet les messages sur deux canaux différents. Cela permet de réduire les échecs de transmissions, et les problèmes liés à des pannes matérielles.

Les déplacements des inverseurs peuvent être synchronisés par le calculateur 24 de contrôle. La synchronisation est favorisée par l'usage du calculateur 24 qui aura les mêmes algorithmes par moteur avec ses propres entrées.

Outre le verrou primaire décrit ci-dessus, le système 22 de contrôle peut comprendre un ou plusieurs autres verrous permettant d'augmenter les lignes de sécurité de l'aéronef. A titre de verrou secondaire, le système 22 peut comprendre un frein appliqué aux organes de manoeuvre des inverseurs. Par exemple, le frein peut être appliqué au moteur électrique d'actionnement du vérin de l'inverseur ou au vérin lui-même. Ce verrou secondaire est destiné à supporter la porte de l'inverseur en cas de défaillance du verrou primaire. Le verrou secondaire peut être commandé par le dispositif 26 de commande. Indépendamment de la présence du verrou secondaire, le système 22 peut comporter un verrou tertiaire permettant la retenue de la porte en cas de défaillance des autres verrous. Ce verrou tertiaire est commandé directement dans le cockpit. Ce verrou tertiaire peut être commandé directement par une manette d'inversion de poussée. Le verrou tertiaire peut aussi être commandé par un autre calculateur que le calculateur 24. Cet autre calculateur peut agir en fonction de la manette d'inversion de poussée et en fonction de paramètres de vol de l'aéronef. Des détecteurs sont en mesure de fournir des informations sur l'état de ces verrous.

Le système 22 de contrôle peut aussi contrôler la distribution de l'alimentation électrique aux différents éléments du système. La coupure de l'alimentation est avantageuse pour éviter par exemple un déploiement intempestif des inverseurs, notamment en vol, ce qui aurait des conséquences très dangereuses. La coupure de l'alimentation est une ligne de sécurité supplémentaire. Le calculateur 24 de contrôle peut gérer l'alimentation électrique de l'inverseur 20 de poussée et en particulier des organes de manoeuvre (par exemple le moteur électrique d'actionnement du vérin) de l'inverseur 20 de poussée. Le calculateur 24 est en mesure d'alimenter ou de couper l'alimentation électrique des organes de manoeuvre de l'inverseur 20. La coupure de l'alimentation électrique des organes de manoeuvre peut être faite directement par le calculateur 24 de contrôle ou par l'intermédiaire du dispositif 26 de commande. Le calculateur 24 de contrôle peut aussi gérer l'alimentation électrique du dispositif 26 de commande ; en particulier, le calculateur 24 peut couper l'alimentation du dispositif 26 si ce dernier a un comportement anormal.

Un procédé de contrôle d'un turboréacteur appliqué au système 22 de contrôle peut comprendre une étape de transmission d'informations d'état de l'inverseur 20 par les détecteurs 30 au calculateur 24 par l'intermédiaire du dispositif 26 de commande. Le procédé peut ensuite comprendre des étapes de contrôle du dispositif 26 de commande par le calculateur 24 en fonction de ces informations et de contrôle du dispositif 28 de régulation par le calculateur 24 en fonction de ces informations. Selon ce procédé, le contrôle de chaque dispositif 26 et 28 par le calculateur est fait en parallèle ; seul le calculateur 24 a autorité sur l'un et l'autre des dispositifs 26 et 28. Les avantages décrits précédemment s'appliquent ici.

Un exemple de fonctionnement est maintenant décrit. Il s'agit là du déploiement de l'inverseur, le repliement de l'inverseur pouvant être opéré selon le même principe. Le troisième verrou, le cas échéant, est déverrouillé en premier lieu. Dès que le déverrouillage est effectif, les détecteurs associés au verrou tertiaire en informent le calculateur 24, éventuellement par l'intermédiaire du dispositif 26 de commande. Une première série d'évènements peut avoir lieu au niveau du calculateur 24. Le calculateur 24 (ou en particulier l'unité 46) déclenche l'alimentation des organes de manoeuvre, en particulier le moteur d'actionnement du vérin, éventuellement par l'intermédiaire du dispositif 26 de commande. Une fois la mise sous tension des organes de manoeuvre effective, le calculateur 24 (ou en particulier l'unité 44) envoie un ordre de déploiement au dispositif 26 de commande. Ensuite, une deuxième série d'événements peut avoir lieu au niveau du dispositif 26 de commande. A la réception de l'ordre du calculateur 24 de contrôle, le dispositif 26 commande le déverrouillage du verrou secondaire. Dès que les détecteurs associés au verrou secondaire détectent que le déverrouillage du verrou secondaire est effectif, une information est transmise au dispositif 26 de commande. A réception de cette information, le dispositif 26 de commande déverrouille le verrou primaire. Dès que les détecteurs associés au verrou primaire détectent que le déverrouillage du verrou primaire est effectif, une information est transmise au dispositif 26 de commande. A réception de cette information, le dispositif 26 commande l'ouverture de la porte de l'inverseur par activation du moteur d'actionnement du vérin. Dès que les détecteurs 30 d'état de l'inverseur détectent que la porte est ouverte, une information est transmise au dispositif 26 de commande. L'information est relayée au calculateur 24. Le calculateur 24 peut couper l'alimentation électrique. Cette coupure entraîne un verrouillage des portes de l'inverseur et jet inversé. Le calculateur 24 peut alors envoyer un ordre au dispositif 28 de régulation pour modifier la puissance du turboréacteur. Le dispositif 28 peut déclencher l'accélération du turboréacteur pour accentuer le freinage de l'aéronef. Egalement, il est envisageable que l'information d'ouverture de porte de l'inverseur soit directement transmise au dispositif 28 de régulation qui est en mesure de comparer ces informations avec l'ordre reçu du calculateur 24.

Dans ce qui précède, les détecteurs mentionnés peuvent être non seulement en mesure de renseigner l'état final des évènements, mais aussi en mesure de renseigner sur l'état d'avancement des évènements. Ceci permet de mieux contrôler le déploiement des portes de l'inverseur. Egalement, toutes les informations des détecteurs ou seulement une parties d'entre elles peuvent être relayées au calculateur ; notamment, les informations sur l'état des verrous secondaire et tertiaire peuvent être relayées au calculateur alors que les informations sur l'état du verrou primaire restent au niveau du dispositif de commande. Ceci permet d'alléger le matériel en termes d'entrées/sorties.

## Revendications

1. Un système (22) de contrôle **caractérisé en ce qu'**il comprend
- des détecteurs (30) d'état d'un inverseur de poussée de turboréacteur,
- un calculateur (24) de contrôle,
- un dispositif (26) de commande de l'inverseur contrôlé par le calculateur en fonction des informations des détecteurs fournies au calculateur par l'intermédiaire du dispositif de commande,
- un dispositif (28) de régulation du turboréacteur contrôlé par le calculateur en fonction des informations des détecteurs fournies au calculateur par l'intermédiaire du dispositif de commande.

2. Le système (22) selon la revendication 1, **caractérisé en ce que** le calculateur (24) de contrôle est adapté à contrôler l'alimentation électrique de l'inverseur de poussée.

3. Le système (22) selon la revendication 1 ou 2, **caractérisé en ce que** le calculateur (24) de contrôle comprend des unités choisies dans le groupe comprenant une unité (46) de contrôle de l'alimentation électrique de l'inverseur de poussée, une unité (44) de contrôle du changement d'état de l'inverseur de poussée, une unité (47) de contrôle de la régulation du turboréacteur.

4. Le système (22) selon l'une des revendications 1 à 3, **caractérisé en ce que** les détecteurs (30) d'état sont adaptés à fournir des informations au dispositif (28) de régulation.

5. Le système (22) selon l'une des revendications 1 à 4, **caractérisé en ce que** le dispositif (28) de régulation est adapté à fournir des informations de fonctionnement du turboréacteur au calculateur (24).

6. Un aéronef (10) comprenant
- au moins un turboréacteur (18) avec un inverseur (20) de poussée,
- le système (22) selon l'une des revendications 1 à 5, le système contrôlant le turboréacteur.

7. Un procédé de contrôle d'un turboréacteur appliqué au système selon l'une des revendications 1 à 5, caractérisé en qu'il comprend les étapes de
- transmission d'informations d'état de l'inverseur par les détecteurs (30) d'état au calculateur (24) par l'intermédiaire du dispositif (26) de commande,
- contrôle du dispositif (26) de commande par le calculateur (24) en fonction des informations,
- contrôle du dispositif (28) de régulation par le calculateur (24) en fonction des informations.

8. Le procédé selon la revendication 7, **caractérisé en ce qu'**il comprend en outre l'étape de
- contrôle de l'alimentation électrique de l'inverseur de poussée par le calculateur (24).

9. Le procédé selon l'une des revendications 7 ou 8, **caractérisé en ce qu'**il comprend en outre les étapes de
- transmission d'informations d'état de l'inverseur par les détecteurs d'état au dispositif (28) de régulation,
- vérification par le dispositif (28) de régulation de la concordance des informations reçues par les détecteurs d'état avec l'ordre reçu du calculateur (24).

10. Le procédé selon l'une des revendications 7 à 9, **caractérisé en ce qu'**il comprend en outre l'étape de
- fourniture par le dispositif (28) de régulation d'informations de fonctionnement du turboréacteur au calculateur.

## Patentansprüche

1. Kontrollsystem (22), **dadurch gekennzeichnet, dass** es Folgendes umfasst:
- Detektoren (30) für den Zustand eines Schubumkehrers eines Turbostrahltriebwerks,
- einen Kontrollrechner (24),
- eine Vorrichtung (26) zur Steuerung des Umkehrers, die durch den Rechner in Abhängigkeit von den Informationen der Detektoren kontrolliert wird, die dem Rechner über die Steuervorrichtung geliefert werden,
- eine Vorrichtung (28) zur Regelung des Turbostrahltriebwerks, die durch den Rechner in Abhängigkeit von den Informationen der Detektoren kontrolliert wird, die dem Rechner über die Steuervorrichtung geliefert werden.

2. System (22) nach Anspruch 1, **dadurch gekennzeichnet, dass** der Kontrollrechner (24) angepasst ist, um die Stromversorgung des Schubumkehrers zu kontrollieren.

3. System (22) nach Anspruch 1 oder 2, **dadurch gekennzeichnet, dass** der Kontrollrechner (24) Einheiten umfasst, die in der Gruppe ausgewählt sind, die eine Einheit (46) zur Kontrolle der Stromversorgung des Schubumkehrers, eine Einheit (44) zur Kontrolle der Zustandsänderung des Schubumkehrers und eine Einheit (47) zur Kontrolle der Regelung des Turbostrahltriebwerks umfasst.

4. System (22) nach einem der Ansprüche 1 bis 3, **dadurch gekennzeichnet, dass** die Zustandsdetektoren (30) angepasst sind, um Informationen an die Regelungsvorrichtung (28) zu liefern.

5. System (22) nach einem der Ansprüche 1 bis 4, **dadurch gekennzeichnet, dass** die Regelungsvorrichtung (28) angepasst ist, um dem Rechner (24) Betriebsinformationen des Turbostrahltriebwerks zu liefern.

6. Luftfahrzeug (10), das Folgendes umfasst:
- mindestens ein Turbostrahltriebwerk (18) mit einem Schubumkehrer (20),
- das System (22) nach einem der Ansprüche 1 bis 5, wobei das System das Turbostrahltriebwerk kontrolliert.

7. Verfahren zur Kontrolle eines Turbostrahltriebwerks, das auf das System nach einem der Ansprüche 1 bis 5 angewandt wird, **dadurch gekennzeichnet, dass** es die folgenden Schritte umfasst:
- Senden von Zustandsinformationen des Umkehrers durch die Zustandsdetektoren (30) an den Rechner (24) über die Steuervorrichtung (26),
- Kontrolle der Steuervorrichtung (26) durch den Rechner (24) in Abhängigkeit von den Informationen,
- Kontrolle der Regelungsvorrichtung (28) durch den Rechner (24) in Abhängigkeit von den Informationen.

8. Verfahren nach Anspruch 7, **dadurch gekennzeichnet, dass** es ferner den folgenden Schritt umfasst:
- Kontrolle der Stromversorgung des Schubumkehrers durch den Rechner (24).

9. Verfahren nach einem der Ansprüche 7 oder 8, **dadurch gekennzeichnet, dass** es ferner die folgenden Schritte umfasst:
- Senden von Zustandsinformationen des Umkehrers durch die Zustandsdetektoren an die Regelungsvorrichtung (28),
- Überprüfung der Übereinstimmung der durch die Zustandsdetektoren empfangenen Informationen mit dem vom Rechner (24) empfangenen Befehl durch die Regelungsvorrichtung (28).

10. Verfahren nach einem der Ansprüche 7 bis 9, **dadurch gekennzeichnet, dass** es ferner den folgenden Schritt umfasst:
- Liefern von Betriebsinformationen des Turbostrahltriebwerks durch die Regelungsvorrichtung (28) an den Rechner.

## Claims

1. A control and monitoring system (22) **characterized in that** it comprises
- sensors (30) for the status of a turbojet thrust reverser,
- a control and monitoring computing means (24),
- a control unit (26) for the thrust reverser controlled by the computing means as a function of information from the sensors supplied to the computing means via the control unit,
- a turbojet regulating device (28) controlled by the computing means as a function of information from the sensors supplied to the computing means via the control unit.

2. The system (22) according to claim 1, **characterized in that** the control and monitoring computing means (24) is adapted to control the electrical power supply to the thrust reverser.

3. The system (22) according to claim 1 or 2, **characterized in that** the control and monitoring computing means (24) includes units selected from the group comprising a unit (46) for controlling electrical powering of the thrust reverser, a unit (44) for controlling thrust reverser change of status, a unit (47) for controlling turbojet regulation.

4. The system (22) according to one of claims 1 to 3, **characterized in that** the status sensors (30) are adapted to supply information to the regulating device (28).

5. The system (22) according to one of claims 1 to 4, **characterized in that** the regulating device (28) is adapted to supply turbojet operating information to the computing means (24).

6. An aircraft (10) comprising
- at least one turbojet (18) with a thrust reverser (20),
- the system (22) according to one of claims 1 to 5, the system performing turbojet control and monitoring.

7. A method for control and monitoring in a turbojet using a system according to one of claims 1 to 5, **characterized in that** it includes the steps of:
- transmitting thrust reverser status information from status sensors (30) to the computing means (24) via the control unit (26),
- using the computing means (24) to control the control unit (26) as a function of this information,
- using the computing means (24) to control the regulating device (28) as a function of this information.

8. The method according to claim 7, **characterized in that** it further includes the step of
- controlling the electrical power supply of the thrust reverser using the computing means (24).

9. The method according to one of claims 7 or 8, **characterized in that** it further includes the steps of:
- transmitting thrust reverser status information by the status sensors to the regulating device (28),
- using the regulating device (28) to check for concordance between information received by the status sensors and an instruction received from the computing means (24).

10. The method according to one of claims 7 to 9, **characterized in that** it further includes the step of
- using the regulating device (28) to supply turbojet operating information to the computing means.
